# NEW EUROPEAN PATENT SPECIFICATION

(11) **EP 2 230 067 B2**
(45) Date of publication and mention of the opposition decision: **07.09.2022**
(45) Mention of the grant of the patent: 05.06.2013
(21) Application number: 10155608.2
(22) Date of filing: 05.03.2010
(51) Int. Cl.: B29C 65/20, B29C 65/74, B31B 19/86, B31B 23/00, B31B 19/64, B29C 31/00, B26F 1/02

(54) **Machine and method for producing rolls of pre-cut bags with die-cut handles**
Maschine und Verfahren zur Herstellung von Rollen aus vorgeschnittenen Beuteln mit zugeschnittenen Griffen
Machine et procédé pour la fabrication de rouleaux de sachets prédécoupés dotés de poignées découpées à l'emporte-pièce

(30) Priority: 20.03.2009 IT MI20090430
(43) Date of publication of application: 22.09.2010
(73) Proprietor: Mobert S.r.l., 21053 Castellanza VA (IT)
(72) Inventor: Trezzi, Napoleone, 20025 Legnano (MI) (IT)
(74) Representative: Petruzziello, Aldo

(56) References cited:
- EP-A1- 1 123 201
- GB-A- 1 296 003
- GB-A- 1 559 115
- IT-B- 1 217 530
- JP-A- 2008 012 700
- US-A- 3 526 563
- US-A- 4 807 754
- US-A- 4 807 754
- US-A- 5 573 489
- US-A1- 2006 045 393

## Description

The present invention refers to an automatic machine fed continuously with at least one flattened tubular film made of plastic material and suitable for producing and winding rolls of pre-cut bags with die-cut handles of the shopper type. The invention also concerns a method of producing shoppers.

Rolls of pre-cut bags with die-cut handles of the shopper type have long been known and are normally used, for example, in the fruit and vegetable departments of supermarkets for containing the goods to be weighed; the handles of the bag are used to close the bag before weighing.

Obviously rolls of bags of the shopper type can have also different uses.

Production of rolls from moving film requires a solution to the problems arising from the need to make the bags (that is, to heat-seal the tubular films, form the handles by die-cutting and pre-cut them to aid separation of the bags) with the film in movement and winding the strips of bags thus obtained on a support to form the rolls.

The die-cutting station is normally separate from the heat-sealing and pre-cutting machine, which makes the overall system for the production of shoppers complex and costly. Furthermore, there exists the problem of "timing" of the heat-sealing and pre-cutting stations with the die-cutting station when the format (particularly the length) of the bags to be produced changes; generally, the operations to be carried out when the format of the bags changes are long and laborious, and therefore costly.

US 4.807.754 discloses a system for producing T-shirt-shaped bags, starting from tubular rolls of film. This document tends to avoid the entry of air and therefore blowing of the bags after die-cutting of the handles, by providing a pair of foldable, overlapping lips at the mouth of each bag, defined by the side handles, which produce closure of the mouth of the bag during feeding of the film.

Object of the present invention is to provide an automatic machine suitable for producing rolls of pre-cut bags with die-cut handles that is compact and simple and cheap to produce. Another object of the invention is to provide such a machine that simplifies the operations of timing of the die-cutter and the heat sealer in changes of format and thus reduces the idle times of the machine, as well as increasing its production capacity.

These objects are achieved by means of a machine which has the characterizing features indicated in independent claim 1.

Object of the invention is also to propose a method of producing shoppers that is highly efficient. This object is achieved with the characteristics of appended independent claim 7.

Further advantageous characteristics of the invention form the subject matter of the dependent claims.

The invention will now be described with reference to a purely exemplifying and therefore non limiting embodiment thereof, illustrated in the appended drawings, wherein:
Figure 1 shows very schematically a partial side view of a machine for the production of shoppers according to the invention;
Figure 2 shows schematically a side view of the die-cutting station of Figure 1;
Figure 3 shows the die-cutting station of Figure 2 during the die-cutting step;
Figure 4 shows schematically a simplified side view of the winding station;
Figure 5 shows schematically an embodiment of a winding axis of the winding station suitable for forming three rolls of bags.

In the appended figures like elements will be identified by the same reference numerals.

The automatic machine - continuously fed by at least one flattened tubular film made of plastic material and suitable for producing and winding at least one strip of pre-cut bags with die-cut handles - comprises a winding station for the at least one strip of bags and, for each tubular film, at least:
- a heat-sealing and pre-cutting station, to produce a strip of heat-sealed, pre-cut bags from the tubular film;
- means suitable for stopping temporarily the sliding of a portion of tubular film with respect to the heat-sealing and pre-cutting and die-cutting stations, maintaining continuous feeding of the film;
- a die-cutting station, acting on the portion of tubular film whose sliding is stopped by said stopping means, which die-cuts the tubular film or the strip of heat-sealed, pre-cut bags produced by the heat-sealing and pre-cutting station.

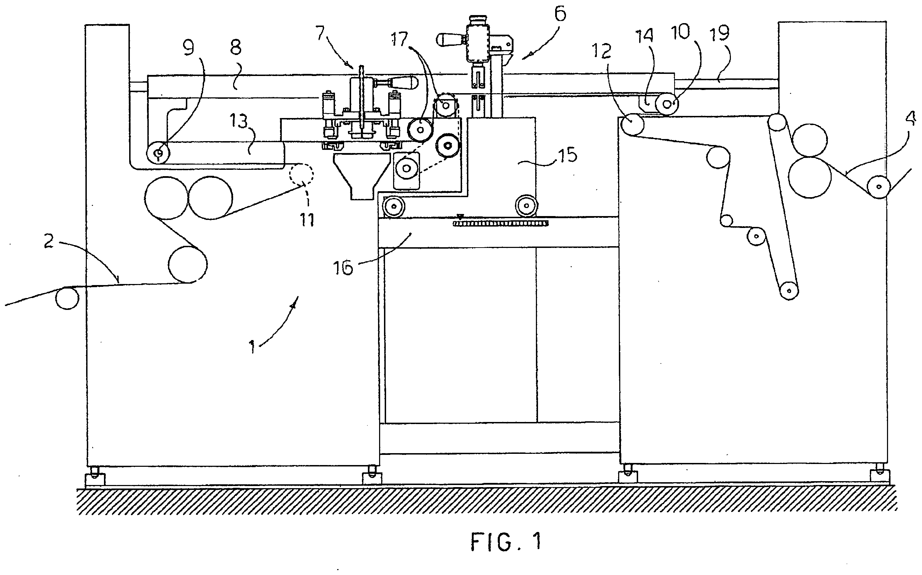

Figure 1 shows very schematically a partial side view of a machine 1 for producing shoppers according to the invention.

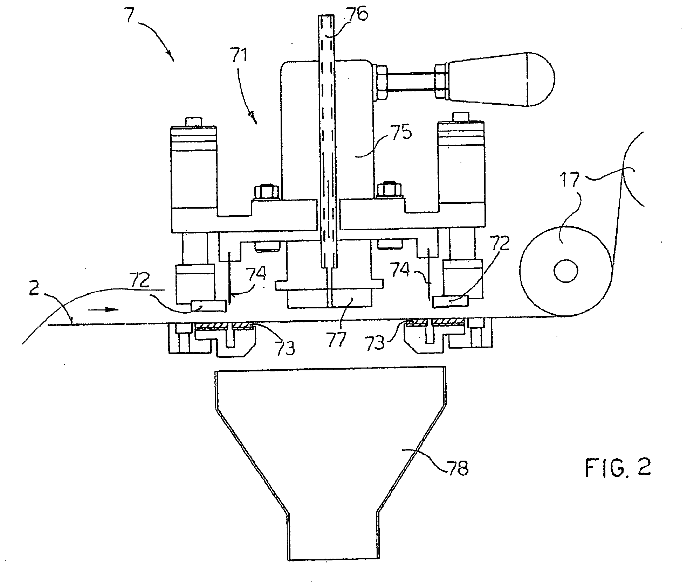

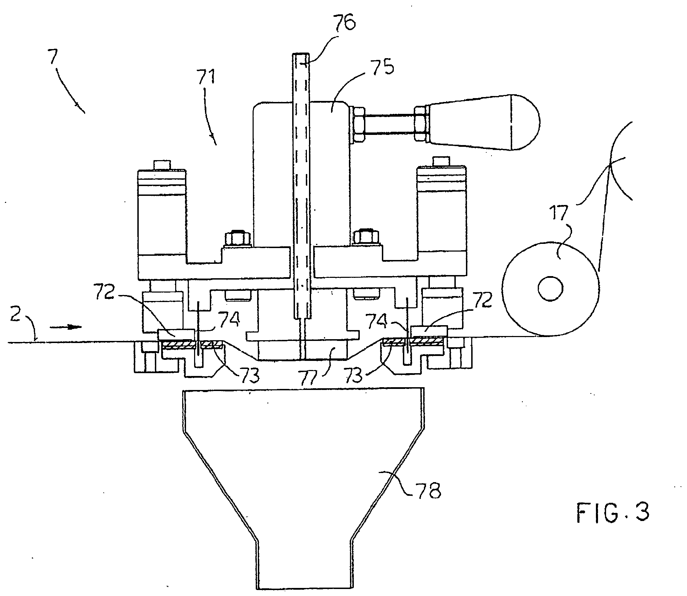

In particular, Figure 1 shows very schematically a side view of an apparatus for producing bags made of plastic material of the type described in Italian patent No. 1.217.530 in the name of the Applicant, to which there has been added a die-cutting station 7 with a toothed blade, shown better in Figures 2 and 3.

In the embodiment of Figure 1, the die-cutting station 7 is positioned upstream of the heat-sealing and pre-cutting station 6 but, without departing from the scope of the invention, the die-cutting station 7 may be positioned downstream of the heat-sealing and pre-cutting station 6.

The apparatus illustrated in Italian patent No. 1.217.530 and shown in Figure 1 comprises means suitable for stopping sliding of a portion of tubular film 2 with respect to the die-cutting station 7 and to the heat-sealing and pre-cutting station 6, whilst maintaining continuous feeding of the film.

The stopping means comprise at least one carriage 8 (which carries motorized rollers 9 and 10) and motorized rollers 11 and 12 integral with the frame of the machine 1 (omitted in Figure 1 for the sake of simplicity of the graphic representation); the tubular film 2, by passing on the rollers 11 and 9, and, respectively, on the rollers 10 and 12, forms respective loops 13 and 14.

In the appended figures the film 2 moves from left to right and the carriage 8 translates in a reciprocating way along rectilinear guides 19.
When the carriage 8 translates along the guides 19 in the opposite direction to that of feeding of the tubular film 2, the motorized roller 9 moves away from the roller 11, causing the width of the loop 13 to increase, while the motorised roller 10 moves towards the roll 12, causing the width of the loop to decrease.

Consequently, the film 2 entering into the machine 1 accumulates at the speed of feeding on the two sides of the loop 13, whilst a winding station 40 (or another apparatus positioned downstream of the machine 1), not visible in Figure 1, is fed always at the same speed by the strip of pre-cut and die-cut bags 4 which had previously accumulated on the two sides of the loop 14.

Therefore, if the speed of translation of the carriage 8 in the opposite direction to that of feeding of the film 2 is equal to half the film feeding speed, the film remains completely still in the portion comprised between the two loops 13 and 14, astride the die-cutting station 7 and the heat-sealing and pre-cutting station 6, for the time during which the carriage 8 makes its translation stroke towards the left. Figure 1 shows the carriage 8 practically at the end of its stroke towards the left.

The operations of die-cutting and heat-sealing are therefore carried out in this stage under optimal conditions, that is, with the film 2 practically still.

Once these operations have been carried out, the carriage 8 inverts its movement, allowing the film 2 accumulated in the loop 13 to move to the die-cutting stations 7 and the film 2 already die-cut to move to the heat-sealing and pre-cutting station 6 and accumulating in the loop 14 the strip of pre-cut and die-cut bags with which subsequently to feed the winding station 40.

The return speed of the carriage 8 need not necessarily be tied to the outward speed, but can be greater, for example.

The operations of die-cutting and heat-sealing and pre-cutting of the film 2 are preferably carried out at the same time.

Combining in a single machine body the die-cutting 7 and heat-sealing and pre-cutting 6 stations allows these stations to be easily synchronized with each other and with the rollers, normally all motorized (not identified with reference numerals in the appended figures for the sake of simplicity of the graphic representation) which regulate the speed of travel of the film 2 and of the strip of bags 4, eliminating problems of timing between the heat-sealing and pre-cutting station 6 and the die-cutting station 7 and thus considerably simplifying the operations of changing the format of the bags 4.

In order to further simplify the operations of changing the format of the bags 4, either the die-cutting station 7 or the heat-sealing and pre-cutting station 6 is fixed, while the other station is mounted on a slide 15 movable on a support plane 16, which makes it possible to vary the distance between the die-cutting stations 7 and the heat sealing and pre-cutting station 6 to adapt it to the length of the bags to be produced.

In the embodiment illustrated in Figure 1, the die-cutting station 7 is fixed whilst the heat-sealing and pre-cutting station 6 is mounted on a slide 15 but, without departing from the scope of the invention, it is possible to mount the die-cutting station 7 on the slide 15 and keep the heat-sealing and pre-cutting station 6 fixed.

Between the die-cutting station 7 and the heat-sealing and pre-cutting station 6 there is a pair of rollers 17, also motorized, suitable to avoid flapping of the film which otherwise would practically be free in the rather long section between the rollers 9 and 10 carried by the carriage 8.

Figure 2 shows schematically a side view of the die-cutting station 7, which differs from a toothed blade die-cutting station of the prior art essentially in that it comprises a pre-blocking and tensioning system for the film 2 which allows the toothed blade 74 to obtain a more uniform cut of the handles of the bag 4 and, consequently, a product of better quality.

The movable portion 71 of the die-cutting station 7 carries pressing means 72, preferably situated on the outside of the cutting blade 74 which, during the die-cutting step (shown in Figure 3) blocks the film 2 against a striker 73, preferably made of rubber, integral with the fixed part of the die-cutting station 7, omitted for the sake of simplicity of the graphic representation. Of course the pressing means 72 can be disposed inside the cutting blade 74 or on both sides.

The movable portion 71 of the die-cutting station 7 carries a further pressing means 75, preferably situated at the centre of the movable portion 71, which ends with a pad 77 made of soft material (foam rubber, for example) which, during the die-cutting step, tensions the film 2 blocked between the pressing means 72 and the striker 73, facilitating the action of the blade 74.

At the end of the die-cutting step, the scrap is removed by an air flow delivered by a nozzle 76 (preferably) situated at the centre of the further pressing means 75, which causes it to fall into the hopper 78.

Also visible in Figure 2 are the motorized rollers 17 situated downstream of the die-cutting station 7.

Figure 3 shows the die-cutting station 7 during the die-cutting step, with the film 2 blocked between the pressing means 72 and the striker 73 and further tensioned by the pad 77 carried by the pressing means 75; also visible in Figure 3 are the motorized rollers 17 situated downstream of the die-cutting station 7.

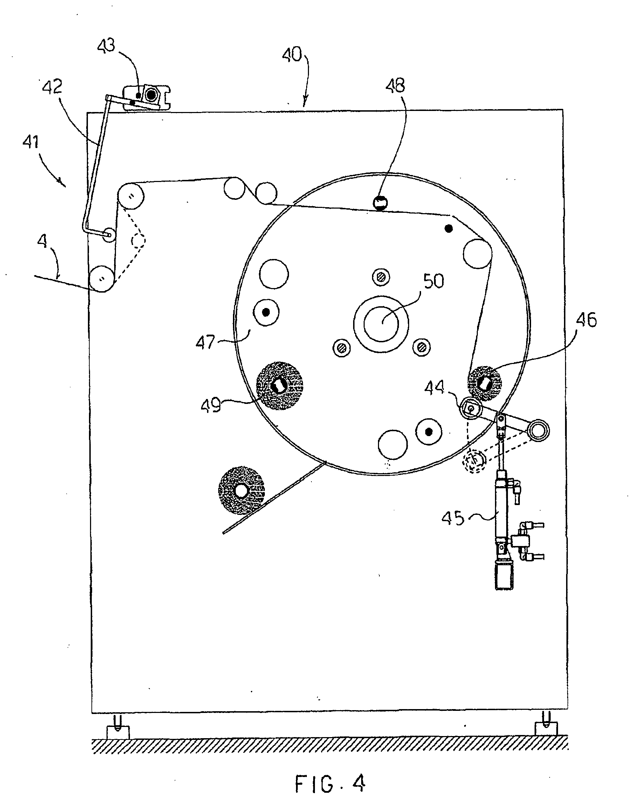

Figure 4 shows schematically a simplified side view of a winding station 40.

A strip of bags 4 produced by die-cutting and heat-sealing and pre-cutting of a tubular film 2 can have creases in the handle area which, by overlapping when a considerable number of bags 4 is wound (the rolls used in supermarkets normally contain about 250 bags), create rolls of bags with a different diameter though the number of bags wound is the same.

This makes it impossible to wind a plurality of strips of bags on a single axis in that, the number of turns of the winding axis being equal, the peripheral winding speed varies according to the diameter of the roll.
For the same reason, it is not possible to wind strips of bags obtained from tubular films of different thicknesses on a single axis.

As stated previously, this problem has so far been solved by using a plurality of independent winding assemblies, one for each strip of bags, but this solution is too costly if three or more rolls of bags are to be produced.

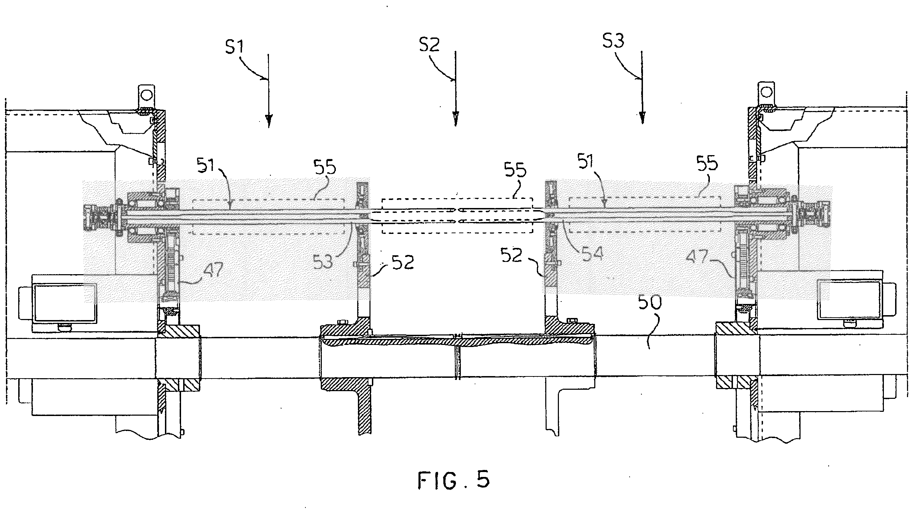

A winding station 40 produced according to the invention makes it possible to overcome this problem since it allows two or more rolls of bags 4 wound on a single winding axis 51 to be produced simply and cheaply (Figure 5).

The winding station 40 comprises, for each strip of bags 4 to be wound on the single winding axis 51, means 41 suitable for detecting the tension of said strip of bags 4 and means 45, controlled by detecting means 41, which vary the pressure exerted by a contrast roller 44 on the roll 46 being formed.

In the embodiment illustrated in Figure 4, the means 41 consist of a rocker arm 42 which rests on the strip of bags 4 and sensors 43 suitable for detecting the tension of the strip of bags 4 by detecting the position of the rocker arm 42.

If the roll that is being formed with a strip of bags 4 has a different diameter from that of the other rolls being formed (because of creases and/or differences in the thickness of the film or for any other reason), the tension of said strip of bags 4 is different from that of the adjacent strips.

As is known, in order to obtain compact, well tensioned rolls, each roll being formed is pressed by a contrast roller and it is possible to vary the compactness of the roll (and, consequently, its diameter) by varying the pressure of the contrast roller.

By controlling, through the signal emitted by the sensors 43, the means 45 (schematically indicated in Figure 4 by a pneumatic cylinder) which vary the pressure exerted by the contrast roller 44 on the roll 46 being formed, it is possible to make the diameter of the roll 46 and its peripheral winding speed vary to return (and maintain) its diameter and its peripheral winding speed to that of the other rolls which are being formed on the single winding axis 51.

In particular, the sensors 43 control the means 45 to vary the pressure exerted by the contrast roller 44 on the roll 46 (causing the diameter and the peripheral winding speed to increase) when they detect that the tension of the relative strip of bags 4 is lower than that of the adjacent strips, whilst they control the means 45 to vary the pressure exerted by the contrast roller 44 on the roll 46 (reducing the diameter and the peripheral winding speed) when they detect that the tension of the relative strip of bags 4 is greater than that of the adjacent strips.

In Figure 4 the winding station 40 comprises three stations mounted on a turntable 47 pivoted on an axis 50: a station 48 for starting roll winding, a work station in which the roll 46 is formed and an unloading station 49 to unload the roll of bags 4 already formed: the turntable 47 and the stations 48 and 49 will not be described because they are per se known.

Figure 5 shows schematically a preferred embodiment of the winding axis 51 of a winding station 40 suitable to form three rolls of bags 4.

In Figure 5 the winding axis 51 is carried by two turntables 47 pivoted at opposite ends of the axis 50, is supported by two intermediate supports 52 movable along the axis 50 to adapt their distance to the width of the roll 46 to be formed, and consists of a pair of pliers (53, 54) mechanically connected to each other to rotate in the same direction and at the same speed.

The winding station 40 can be used to wind one or more wider rolls of bags 4 by joining the intermediate supports 52 at the centre.

Each of the strips of bags 4, indicated schematically in Figure 5 by means of arrows S1, S2 and S3, is wound on one of the cores 55 carried by the winding axis 51 but the cores 55 can be omitted without departing from the scope of the invention.

The pliers (53, 54) are equal, installed opposite to each other and are fork-shaped to facilitate their insertion in the turntables 47 and in the intermediate supports 52, their removal to unload the rolls of bags 4 already formed, as well as insertion and blocking of the cores 55, if present.

The pliers 53 and 54 can be replaced with a single fork-shaped plier.

The scope of the invention, is defined by the claims..

## Claims

1. A machine (1), continuously fed with at least one flattened tubular film (2) made of plastic material and suitable for producing and winding at least one strip of pre-cut bags (4) provided with die-cut handles, said machine (1) comprising a winding station (40) of the at least one strip of bags (4) and, for each tubular film (2), at least:
- a heat-sealing and pre-cutting station (6), suitable for producing a strip of heat-sealed and pre-cut bags (4) from the tubular film (2);
- a carriage (8) movable in a reciprocating way in the advancement direction of the film (2), such as to determine two end loops (13, 14) for accumulating the film and an area between said loops (13, 14) for temporarily stopping the film, wherein said heat-sealing and pre-cutting station (6) is placed,
**characterized in that** a die-cutting station (7) is also placed in said area between the two loops (13, 14), which is suitable for die-cutting the tubular film (2) or the strip of heat-sealed and pre-cut bags (4) produced by the heat-sealing and pre-cutting station (6), at least one between said die-cutting station (7) and said heat-sealing and pre-cutting station (6) being mounted movable to adapt the distance between the die-cutting station (7) and the heat-sealing and pre-cutting station (6) to the length of the bags (4) to be produced,
the die-cutting station (7) comprising a movable portion (71) carrying a pressing means (72) designed to block the film (2) against a striker (73) integral with the fixed part of the die cutting station (7) and a further pressing means (75) ending with a pad (77) made of a soft material designed to tension the film (2) blocked between the pressing means (72) and the striker (73), the pressing means (75) carrying a nozzle (76) designed to deliver an air blow to remove the die-cutting scrap.

2. Machine (1) as in claim 1, **characterised in that** the die-cutting station (7) is fixed, whilst the heat-sealing and pre-cutting station (6) is mounted on a slide (15) movable on a support plane (16).

3. Machine (1) as in claim 1, **characterised in that** the heat-sealing and pre-cutting station (6) is fixed, whilst the die-cutting station (7) is mounted on a slide (15) movable on a support plane (16).

4. Machine (1) as in claim 1, **characterised in that** it further comprises a pair of motorised rolls (17) placed between the die-cutting station (7) and the heat-sealing and pre-cutting station (6), designed to prevent flapping of the film (2) in the area between said loops (13, 14).

5. Machine (1) as in claim 1, **characterised in that** said winding station (40) comprises, for each strip of bags (4) to be wound on a single winding axis (51),
- means (41) suitable for detecting the tension of said strip of bags (4), and
- means (45), controlled by the detecting means (41), suitable for varying the pressure exerted by a contrast roller (44) on the roll (46) being formed.

6. Machine (1) as in claim 5, **characterised in that** the means (41) suitable for detecting the tension of a strip of bags (4) consist of a rocker arm (42) resting on said strip of bags (4) and of sensors (43) suitable for detecting the tension of the strip of bags (4) by detecting the position of the rocker arm (42).

7. A method of producing pre-cut bags provided with die-cut handles made in plastic material and wound in rolls, starting from a continuously fed tubular flattened film, wherein a portion of the film is moved to-and-fro by a carriage (8) thereby forming two end loops (13, 14) for accumulating the film, such that the length of the entry loop (13) increases and the length of the exit loop (14) decreases when the carriage (8) moves in a direction opposite to that of the film feeding and vice versa, the movement speed of the carriage (8) in a direction opposite to that of the film feeding being such to stop the sliding of the film in the area comprised between said loops (13, 14), during the stopping step of the tubular film (2), die-cutting and heat-sealing and cutting steps being carried out thereon to produce said pre-cut bags provided with die-cut handles (shoppers),
during the die-cutting step the film (2) is blocked against a striker (73) integral with the fixed part of the die-cutting station (7) by a pressing means (72) carried by a movable portion (71) of the die-cutting station (7) and tensioned by a further pressing means (75) ending with a pad (77) made of a soft material;
at the end of the die-cutting step, the scrap is removed by an air blow delivered by a nozzle (76) carried by the further pressing means (75),
an adjustment of the distance between said die-cutting station (7) and heat-sealing and pre-cutting station (6) being provided, based on the length of the bags (4) to be produced.

8. A method as in claim 7, **characterized in that** said carriage (8) moves in a direction opposite to that of feeding of the film (2) at a speed which is the half of the constant speed of film feeding.

9. A method according to claim 7 or 8, wherein said die-cutting and heat-sealing and pre-cutting operations are carried out in two different stations (7, 6), simultaneously or offset with respect to each other.

10. A method as in claim 9, wherein a tensioning of the film (2) is provided between said die-cutting station (7) and heat-sealing and pre-cutting station (6), to prevent flattening between said loops (13, 14).

## Patentansprüche

1. Maschine (1), der fortlaufend wenigstens ein abgeflachter rohrförmiger Film (2) aus einem Kunststoffmaterial zugeführt wird, und die dazu geeignet ist, wenigstens einen Streifen aus vorgeschnittenen Beuteln (4), die mit zugeschnittenen Griffen versehen sind, herzustellen und aufzuwickeln, wobei die Maschine (1) eine Aufwickelstation (40) für den wenigstens einen Streifen von Beuteln (4) und für jeden rohrförmigen Film (2) wenigstens:
- eine Heißsiegelungs- und Vorschneidestation (6), die zur Herstellung eines Streifens von heißgesiegelten und vorgeschnittenen Beuteln (4) aus dem rohrförmigen Film (2) geeignet ist;
- einen Schlitten (8), der auf eine hin und her laufende Weise in der Vorschubrichtung des Films (2) beweglich ist, um zwei Endschleifen (13, 14) zum Ansammeln des Films und einen Bereich zwischen den Schleifen (13, 14) zum zeitweiligen Anhalten des Films, in dem die Heißsiegelungs- und Vorschneidestation (6) angeordnet ist, zu definieren, umfasst,
**dadurch gekennzeichnet, dass** in dem Bereich zwischen den beiden Schleifen (13, 14) auch eine Zuschneidestation (7) angeordnet ist, die dazu geeignet ist, den rohrförmigen Film (2) oder den Streifen aus heißgesiegelten und vorgeschnittenen Beuteln (4), der durch die Heißsiegelungs- und Vorschneidestation (6) hergestellt wurde, zuzuschneiden, wobei wenigstens eine aus der Zuschneidestation (7) und der Heißsiegelungs- und Vorschneidestation (6) beweglich angebracht ist, um den Abstand zwischen der Zuschneidestation (7) und der Heißsiegelungs- und Vorschneidestation (6) an die Länge der Beutel (4), die hergestellt werden sollen, anzupassen,
die Zuschneidestation (7) einen beweglichen Abschnitt (71) umfasst, der ein Pressmittel (72) trägt, das dazu bestimmt ist, den Film (2) an einer mit dem festen Teil der Zuschneidestation (7) einstückigen Gegenplatte (73) zu blockieren, sowie ein zweites Pressmittel (75), das in einem Kissen (77) aus einem weichen Material endet trägt, welches dazu bestimmt ist, den zwischen dem Pressmittel (72) und der Gegenplatte (73) blockierten Film (2) zu spannen, wobei das Pressmittel (75) eine Düse (76) trägt, die dazu bestimmt ist, einen Luftstoß zu liefern, um den Zuschneideabfall zu entfernen.

2. Maschine (1) nach Anspruch 1, **dadurch gekennzeichnet, dass** die Zuschneidestation (7) fixiert ist, während die Heißsiegelungs- und Vorschneidestation (6) an einem Gleitstück (15), das auf einer Auflagefläche (16) beweglich ist, angebracht ist.

3. Maschine (1) nach Anspruch 1, **dadurch gekennzeichnet, dass** die Heißsiegelungs- und Vorschneidestation (6) fixiert ist, während die Zuschneidestation (7) an einem Gleitstück (15), das auf einer Auflagefläche (16) beweglich ist, angebracht ist.

4. Maschine (1) nach Anspruch 1, **dadurch gekennzeichnet, dass** sie ferner ein Paar von motorisierten Walzen (17) umfasst, die zwischen der Zuschneidestation (7) und der Heißsiegelungs- und Vorschneidestation (6) angeordnet ist und dazu bestimmt sind, ein Flattern des Films (2) in dem Bereich der Schleifen (13, 14) zu verhindern.

5. Maschine (1) nach Anspruch 1, **dadurch gekennzeichnet, dass** die Aufwickelstation (40) für jeden einzelnen Streifen von Beuteln (4), der auf eine einzelne Aufwickelwelle (51) aufgewickelt werden soll,
- ein Mittel (41), das dazu geeignet ist, die Spannung des Streifens von Beuteln (4) festzustellen, und
- ein Mittel (45), das durch das Feststellmittel (41) gesteuert wird und dazu geeignet ist, den Druck, der durch eine Gegenwalze (44) auf die gebildete Rolle (46) ausgeübt wird, zu verändern, umfasst.

6. Maschine (1) nach Anspruch 5, **dadurch gekennzeichnet, dass** das Mittel (41), das dazu geeignet ist, die Spannung eines Streifens von Beuteln (4) festzustellen, aus einem Kipphebel (42), der auf dem Streifen von Beuteln (4) ruht, und aus Sensoren (43), die dazu geeignet sind, die Spannung des Streifens von Beuteln (4) durch Feststellen der Position des Kipphebels (42) festzustellen, besteht.

7. Verfahren zur Herstellung vorgeschnittener Beutel, die mit zugeschnittenen Griffen versehen sind, und die aus einem Kunststoffmaterial bestehen und zu Rollen aufgewickelt sind, beginnend mit einem fortlaufend zugeführten rohrförmigen abgeflachten Film, wobei ein Abschnitt des Films durch einen Schlitten (8) hin und her bewegt wird, wodurch zwei Endschleifen (13, 14) zum Ansammeln des Films so gebildet werden, dass die Länge der Eingangsschleife (13) zunimmt und die Länge der Ausgangsschleife (14) abnimmt, wenn sich der Schlitten (8) in eine Richtung, die zu jener der Filmzufuhr entgegengesetzt ist, bewegt, und umgekehrt, wobei die Bewegungsgeschwindigkeit des Schlittens (8) in eine Richtung, die zu jener der Filmzufuhr entgegengesetzt ist, derart ist, dass das Gleiten des Films in dem zwischen den Schleifen (13, 14) enthaltenen Bereich angehalten wird, wobei während des Schritts des Anhaltens des rohrförmigen Films (2) an diesem ein Zuschneide- und ein Heißsiegelungs- und Schneideschritt vorgenommen werden, um die mit zugeschnittenen Griffen versehenen vorgeschnittenen Beutel (Shopper) herzustellen,
während des Stanzschrittes wird die Folie (2) durch ein Pressmittel (72), das von einem beweglichen Teil (71) der Zuschneidestation (7) getragen wird, gegen einen mit dem festen Teil der Zuschneidestation (7) einstückigen Gegenplatte (73) blockiert und durch ein weiteres Druckmittel (75), das mit einem Kissen (77) aus einem weichen Material endet, gespannt, am Ende des Stanzschrittes wird der Abfall durch einen Luftstoß entfernt, der durch eine von dem weiteren Druckmittel (75) getragene Düse (76) abgegeben wird,
wobei ein Regulieren des Abstands zwischen der Zuschneidestation (7) und der Heißsiegelungs- und Vorschneidestation (6) auf Basis der Länge der Beutel (4), die hergestellt werden sollen, bereitgestellt wird.

8. Verfahren nach Anspruch 7, **dadurch gekennzeichnet, dass** sich der Schlitten (8) mit einer Geschwindigkeit, die die Hälfte der konstanten Geschwindigkeit der Filmzufuhr beträgt, in eine Richtung bewegt, die zu jener der Zufuhr des Films (2) entgegengesetzt ist.

9. Verfahren nach Anspruch 7 oder 8, wobei die Zuschneide- und die Heißsiegelungs- und Vorschneidetätigkeit gleichzeitig oder in Bezug zueinander versetzt an zwei verschiedenen Stationen (7, 6) durchgeführt werden.

10. Verfahren nach Anspruch 9, wobei zwischen der Zuschneidestation (7) und der Heißsiegelungs- und Vorschneidestation (6) ein Spannen des Films (2) bereitgestellt wird, um ein Abflachen zwischen den Schleifen (13, 14) zu verhindern.

## Revendications

1. Machine (1) alimentée en continu avec au moins un film tubulaire aplati (2) fait de matériau plastique et adaptée pour fabriquer et enrouler au moins une bande de sachets (4) prédécoupés dotés de poignées découpées à l'emporte-pièce, la machine (1) comprenant un poste d'enroulement (40) de l'au moins une bande de sachets (4), et, pour chaque film tubulaire (2), au moins:
- un poste de thermoscellement et de prédécoupe (6) adapté pour fabriquer une bande de sachets (4) thermoscellés et prédécoupés du film tubulaire (2);
- un chariot (8) pouvant être déplacé en va-et-vient dans le sens d'avancement du film (2), de manière à détenniner deux boucles d'extrémité (13, 14) pour accumuler le film et une zone entre ces boucles (13, 14) pour arrêter le film temporairement, dans laquelle le poste de thermoscellement et de prédécoupe (6) est placé,
**caractérisé en ce qu'**un poste de découpe à l'emporte-pièce (7) est également placé dans la zone entre les deux boucles (13, 14), lequel est approprié pour découper à l'emporte-pièce le film tubulaire (2) ou la bande de bande de sachets (4) thermoscellés et prédécoupés fabriqués par le poste de thermoscellement et de prédécoupe (6), au moins un du poste de découpe à l'emporte-pièce (7) et du poste de thermoscellement et de prédécoupe (6) étant monté de manière mobile pour adapter la distance entre le poste de découpe à l'emporte-pièce (7) et le poste de thermoscellement et de prédécoupe (6) à la longueur des sachets (4) à fabriquer,
le poste de découpe à l'emporte-pièce (7) comprenant une partie mobile (71) supportant un moyen de pression (72) conçu pour bloquer le film (2) contre un marteau (73) faisant partie intégrante de la pièce fixe du poste de découpe à l'emporte-pièce (7) et un moyen de pression supplémentaire (75) se terminant avec un tampon (77) en matériau souple, conçu pour tendre le film (2) bloqué entre le moyen de pression (72) et le marteau (73), le moyen de pression (75) supportant une buse (76) conçue pour fournir un écoulement d'air pour enlever les déchets de la découpe à l'emporte-pièce.

2. Machine (1) selon la revendication 1, **caractérisée en ce que** le poste de découpe à l'emporte-pièce (7) est fixe, alors que le poste de thermoscellement et de prédécoupe (6) est monté sur une coulisse (15) mobile sur un plan de support (16).

3. Machine (1) selon la revendication 1, **caractérisée en ce que** le poste de découpe à l'emporte-pièce (7) est fixe, alors que le poste de thermoscellement et de prédécoupe (6) est monté sur une coulisse (15) mobile sur un plan de support (16).

4. Machine (1) selon la revendication 1, **caractérisée en ce qu'**elle comprend en outre une paire de rouleaux motorisés (17) placés entre le poste de découpe à l'emporte-pièce (7) et le poste de thermoscellement et de prédécoupe (6), conçus pour éviter que le film (2) ne se rabatte dans la zone entre les boucles (13, 14).

5. Machine (1) selon la revendication 1, **caractérisée en ce que** le poste d'enroulement (40) comprend, pour chaque bande de sachets (4) à enrouler sur un axe unique d'enroulement (51),
- un moyen (41) approprié pour détecter la tension de la bande de sachets (4), et
- un moyen (45) commandé par le moyen de détection (41), adapté pour faire varier la pression exercée par un rouleau de contraste (44) sur le rouleau (46) en train d'être formé.

6. Machine (1) selon la revendication 5, **caractérisée en ce que** le moyen (41) adapté pour détecter la tension d'une bande de sachets (4) consiste en un bras à bascule (42) reposant sur la bande de sachets (4) et de capteurs (43) adaptés pour détecter la tension de la bande de sachets (4) en détectant la position du bras à bascule (42).

7. Procédé de fabrication de sachets prédécoupés dotés de poignées découpées à l'emporte-pièce, faits en matériau plastique et enroulés en rouleaux, commençant par un film aplati tubulaire alimenté en continu, dans lequel une partie du film est déplacée en va-et-vient par un chariot (8) formant ainsi deux boucles d'extrémité (13, 14) pour accumuler le film, de telle sorte que la longueur de la boucle d'entrée (13) augmente et que la longueur de la boucle de sortie (14) décroît lorsque le chariot (8) se déplace dans un sens opposé à celui de l'alimentation du film et vice-versa, la vitesse de mouvement du chariot (8) dans un sens opposé à celui de l'alimentation du film permettant d'arrêter le glissement du film dans la zone comprise entre les boucles (13, 14), pendant l'étape d'arrêt du film tubulaire (2), les étapes de découpe à l'emportepièce et de thermoscellement et de découpe étant effectuées là-dessus pour fabriquer les sachets prédécoupés dotés de poignées découpées à l'emporte-pièce (sacs à provision),
pendant l'étape de découpage, le film (2) est bloqué contre une butée (73) faisant partie intégrante de la partie fixe du poste de découpe à l'emporte-pièce (7) par un moyen de pression (72) porté par une partie mobile (71) du poste de découpe à l'emporte-pièce (7) et tendu par un autre moyen de pression (75) se terminant par un tampon (77) fait d'un matériau souple,
à la fin de l'étape de découpage, les déchets sont enlevés par un soufflage d'air délivré par une buse (76) portée par l'autre moyen de pression (75),
un ajustement de la distance entre le poste de découpe à l'emporte-pièce (7) et le poste de thermoscellement et de prédécoupe (6) est prévu, basé sur la longueur des sachets (4) à fabriquer.

8. Procédé selon la revendication 7, **caractérisé en ce que** le chariot (8) se déplace dans un sens opposé à celui de l'alimentation du film (2), à une vitesse qui est la moitié de la vitesse constante de l'alimentation du film.

9. Procédé selon la revendication 7 ou 8, dans lequel les opérations de découpe à l'emporte-pièce et de thermoscellement et de prédécoupe sont effectuées dans deux postes différents (7, 6) simultanément ou en décalé l'une par rapport à l'autre.

10. Procédé selon la revendication 9, dans lequel une tension du film (2) est prévue entre le poste de découpe à l'emporte-pièce (7) et le poste de thermoscellement et de prédécoupe (6) pour éviter l'aplatissement entre les boucles (13, 14).
